# EUROPÄISCHE PATENTSCHRIFT

(11) **EP 0 952 022 B1**
(45) Veröffentlichungstag und Bekanntmachung des Hinweises auf die Patenterteilung: **02.05.2002**
(21) Anmeldenummer: 99101995.1
(22) Anmeldetag: 01.02.1999
(51) Int. Cl.: B60J 7/12

(54) **Klappverdeck für Cabriofahrzeuge**
Foldable top for convertible vehicles
Toit pliant pour véhicule convertible

(30) Priorität: 22.04.1998 DE 19817700
(43) Veröffentlichungstag der Anmeldung: 27.10.1999
(73) Patentinhaber: Edscha Cabrio-Dachsysteme GmbH, 94491 Hengersberg (DE)
(72) Erfinder: Haberl, Franz, 94574 Wallerfing (DE); Huber, Helmut, 94557 Niederalteich (DE)
(74) Vertreter: Sparing, Rolf Klaus

(56) Entgegenhaltungen:
- DE-A- 3 837 522
- DE-C- 621 351
- US-A- 2 768 857

## Beschreibung

Die Erfindung betrifft ein Klappverdeck nach dem Oberbegriff des Anspruchs 1.

Ein derartiges Klappverdeck ist beispielsweise aus DE-A-34 05 920 bekannt. Bei diesem bekannten Verdeck ist vorgesehen, daß zum Zwecke einer möglichst geringen Beeinträchtigung des Innerraumes des Fahrzeuges in dem von dem in seiner Öffnungsstellung befindlichen Klappverdeck umgrenzten Bereich die Anlenkachsen der hinterer Dachrahmenseitenteile an den einer Hauptsäule vergleichbaren Seitenteilen eines trapezförmigen Hauptspriegels jeweils wenigstens annähernd senkrecht zur Seitenneigung der Seitenteile des trapezförmigen Hauptspriegels ausgerichtet sind. In Verbindung mit einer längenvariablen Ausbildung des bei derartigen einfachen Verdecken erforderlichen Zwischenspriegels kann mittels der Neigung lediglich der Anlenkachsen der hinteren Dachrahmenseitenteile an der Hauptsäule der angestrebte Erfolg einer gewissen Breite des bei geöffnetem Verdeck für die Passagiere im Fondraum verbleibenden Schulterraumes erreicht werden. Allerdings ist die aus DE-A-34 05 920 bekannte Maßnahme auf Verdecke mit einem im Wesentlichen einteiligen Dachrahmen in Verbindung mit einem trapezförmigen Hauptspriegel begrenzt.
Bei einer anderen Bauart von Verdecken, beispielsweise gemäß DE-A-37 24 532, ist eine mehrteilig ausgebildete Hauptsäule des Verdeckes vorgesehen, welche im Wesentlichen jeweils einen Hauptsäulenabschnitt und eine Dachhauthalteschiene umfaßt, wobei die Hauptsäulenabschnitte der Karosseriekontur des Fahrzeuges gegenüber nach innen versetzt angeordnet sind und die Dachhauthalteschienen an der Außenseite der Hauptsäulenabschnitte angelenkt und über schwenkbare Spreizhebel derart ansteuerbar sind, daß sie beim Öffnen des Verdeckes aus einer zum Konturverlauf der Seitenwand der Fahrzeugkarosserie bündigen Stellung in eine näher an den zugeordneten Hauptsäulenabschnitt heran bewegte Verdeckfaltstellung überführbar sind. Diese Einrichtung führt zwar dazu, daß sich beim vollständigen Falten des Verdeckgestelles ein kompaktes Bündel aller Seitenwandteile auf beiden Fahrzeugseiten ergibt, welches lediglich eine minimale Baubreite einnimmt, ist aber wegen des damit verbundenen verhältnismäßig hohen Herstellungsaufwandes nur bei sehr teueren Fahrzeugen vertretbar.

Bei moderneren Fahrzeugbauweisen geht man hauptsächlich aus stilistischen Gründen zunehmend zu einer eher ovalen Querschnittsform der Fahrzeugkarosserie und in vielen Fällen zugleich auch zu einer sich zum Fahrzeugheck hin mehr oder minder verjüngenden Karosseriebreite über. Bei solchen Fahrzeugen führt die bei Faltverdecken der vorgenannten Bauart übliche Verwendung einer ebenen Kinematik für das Verdeckgestänge, bei welcher die Achsen sämtlicher Gelenke innerhalb des Verdeckgestänges im Wesentlichen zueinander parallel und horizontal ausgerichtet quer zur Fahrzeuglängsmittelebene verlaufen, zu einer Beengung in dem von dem in seiner Öffnungsstellung befindlichen Klappverdeck umgrenzten Bereich des Innenraumes des Fahrzeuges, insbesondere zu einer Beengung der Schulterfreiheit der Fondpassagiere, bei in seiner Öffnungsstellung abgelegtem Verdeck.

Es ist die Aufgabe der Erfindung, ein Klappverdeck für Cabriofahrzeuge, insbesondere solche mit im Wesentlichen ovaler oder trapezförmiger Karosseriequerschnittsform und evtl. sich zum Fahrzeugheck hin verjüngender Karosserieform, nach dem Oberbegriff des Anspruchs 1 zu schaffen, daß bei wenigstens nicht größerem Herstellungsaufwand eine größtmögliche Schulterfreiheit der Fondpassagiere erreicht.

Diese Aufgabe wird bei einem eingangs erwähnten Klappverdeck für Cabriofahrzeuge erfindungsgemäß mit den kennzeichnenden Merkmalen des Anspruchs 1 gelöst. Bei geeigneter Auswahl der Ausrichtung der Anlenkachsen von Hauptsäule und Hauptlenker kann eine gewisse nach auswärts gerichtete Stellung bzw. Aufweitung der hinteren Dachrahmenteile bei in der Öffnungslage abgelegtem Verdeck erreicht werden, was naturgemäß und ohne zusätzlichen Aufwand zu der angestrebten Vergrößerung der Schulterfreiheit für die Fondraumpassagiere führt. Resultierend aus der Aufweitung der hinteren Dachrahmenteile bei in der Öffnungslage abgelegtem Verdeck kann auch eine stärkere Fallung der Fahrzeugseitenscheiben vorgesehen werden, ohne daß im Bereich des Fondraumes die Schulterfreiheit übergebührlich beeinträchtigt wird.

In der bevorzugten Verwirklichungsform eines erfindungsgemäßen Klappverdeckes ist zur Erzwingung einer auswärts gerichteten Verstellbewegung der vorderen Enden der hinteren Dachrahmenteile insbesondere vorgesehen, daß wenigstens die den hinteren Dachrahmenteil mit der Hauptsäule verbindende Anlenkachse derart schräg im Raum liegend angeordnet ist, daß sie sich mit der die karosserieseitige Anlenkung der Hauptsäule bildenden Anlenkachse schneidet. Vorzugsweise ist aber vorgesehen, daß die Anlenkachsen von Hauptsäule und Hauptlenker einerseits an der Fahrzeugkarosserie und andererseits am hinteren Dachrahmenteil in ihrer gedachten Verlängerung einer einem gemeinsamen Fluchtpunkt zustrebenden Neigungslage gegenüber der Horizontalen ausgerichtet sind.

Die Neigung der verschiedenen Anlenkachsen ist im weiteren zweckmäßigerweise auch noch so ausgerichtet, daß der gemeinsame Fluchtpunkt in dem sich die gedachten Verlängerungen sämtlicher Anlenkachsen der Hauptsäule und des Hauptlenkers jeweils mit einem Abstand zu dieser jenseits der gegenüberliegenden Fahrzeugaußenseite liegt, derart, daß insgesamt ein sphärisches Getriebe entsteht.

Im weiteren ergibt sich eine besonders günstige und die Vermeidung von räumlichen Gelenken bzw. von Gelenken mit mehr als einem Freiheitsgrad gestattende Ausführungsform daraus, daß die Anlenkachsen von Hauptsäule und Hauptlenker an der Fahrzeugkarosserie und die Anlenkachsen von Hauptsäule und Hauptlenker am hinteren Dachrahmenteil jeweils einen kleineren Fluchtwinkel zwischen sich einschließen als die beiden Anlenkachspaare miteinander. Der Einsatz ausschließlich als Drehlager ausgebildeter Anlenkachse erbringt gegenüber dem auch nur teilweisen Einsatz von Anlenkungen mit mehr als einem Freiheitsgrad eine höchstmögliche Stabilität des Verdeckgestänges.

Die Erfindung ist in der nachfolgenden Beispielsbeschreibung anhand eines in der Zeichnung dargestellten Ausführungsbeispieles im Einzelnen beschrieben.

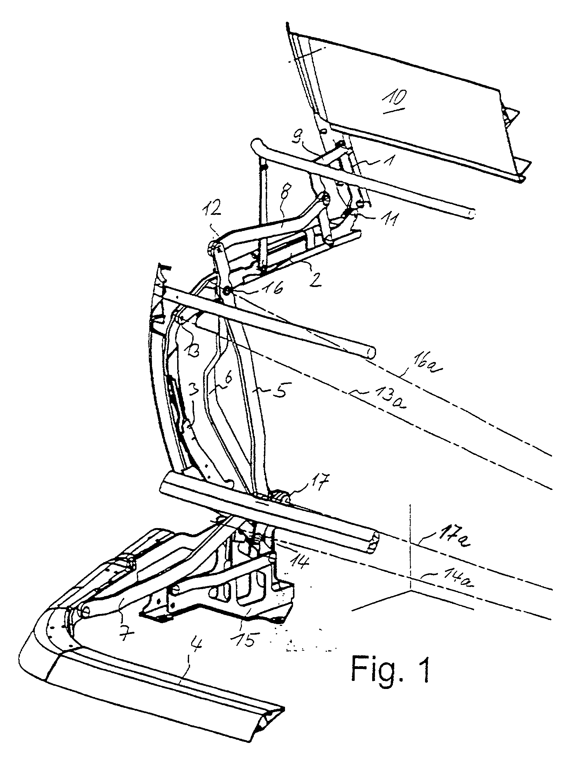

- Fig. 1: zeigt eine ausschnittweise schaubildliche Darstellung des Verdeckgestänges eines Klappverdeckes bei in einer Teilöffnungslage befindlichem Verdeck.
- Fig. 2: zeigt eine ausschnittweise schaubildliche Darstellung des Verdeckgestänges eines Klappverdeckes gemäß Fig. 1 im vergrößerten Maßstab.

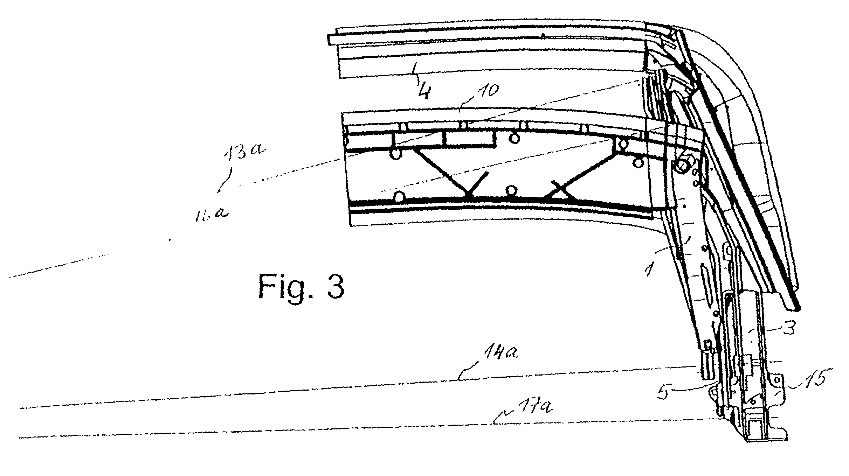

- Fig. 3: zeigt eine ausschnittweise schaubildliche Darstellung des Verdeckgestänges eines Klappverdeckes gemäß Fig. 1 bei in seiner Öffnungslage befindlichem Verdeck.

Das in der Zeichnung dargestellte Verdeckgestänge eines Klappverdeckes für Cabriofahrzeuge umfaßt in der üblichen Weise eine Gruppe von Rahmenteilen und eine Gruppe von Lenkern, wobei die Gruppe der Rahmenteile ein vorderes 1 und ein hinteres Dachrahmenteil 2 eine Hauptsäule 3 und einen Stoffspannbügel 4 und die Gruppe der Lenker einen Hauptlenker 5 sowie einerseits dem Stoffspannbügel 4 zugeordnete Spannstangen 6 und 7 und andererseits der Bewegung des vorderen Dachrahmenteiles 1 zugeordnete Antriebslenker 8 und 9. An das vordere Dachrahmenteil 1 ist ein bei geschlossenem Verdeck auf dem in der Zeichnung im Einzelnen nicht gezeigten Windschutzscheibenrahmen aufliegender Frontspriegel 10 angeschlossen. Hinterendig ist das vordere Dachrahmenteil 1 um eine quer zur Fahrzeuglängsmittelebene ausgerichtete Achse 11 schwenkbar mit dem hinteren Dachrahmenteil 2 verbunden, welches seinerseits hinterendig an der Hauptsäule 3 angelenkt ist. An seinem oberen Ende steht der Hauptlenker 5 vermittels eines um eine horizontal und quer zur Fahrzeuglängsmittelebene ausgerichtete Achse 12 mit dem Antriebslenker 8 in Antriebsverbindung.
Die Hauptsäule 3 ist oberendig um eine unter einem ersten Winkel zur Horizontalen schräg im Raum liegende, einen ersten Gelenkpunkt eines sphärischen Getriebes bildende Achse 13 schwenkbar mit dem hinteren Dachrahmenteil 2 verbunden. Unterendig ist die Hauptsäule 3 um eine unter einem zweiten Winkel zur Horizontalen schräg im Raum liegende, einen zweiten Gelenkpunkt eines sphärischen Getriebes bildende Achse 14 schwenkbar an einer karosseriefesten Konsole 15 angelenkt.

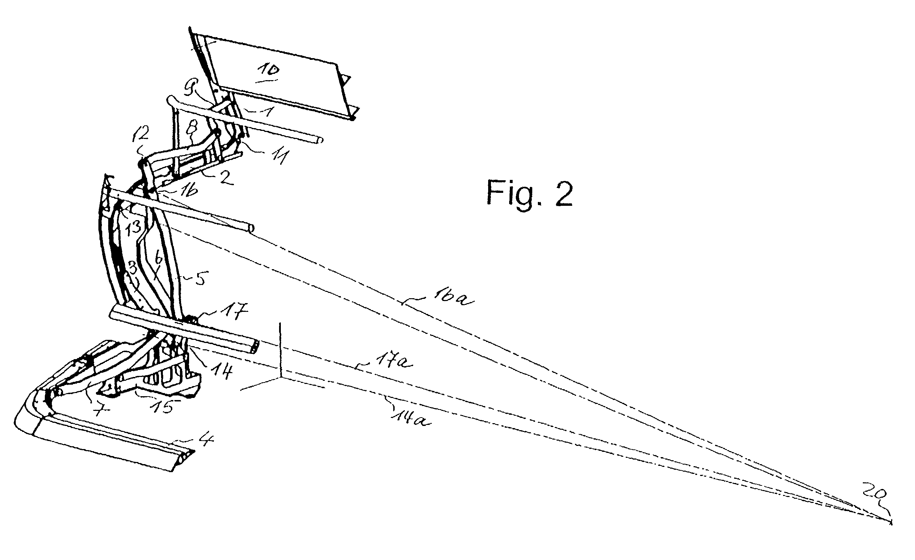

Der Hauptlenker 5 ist im Abstand zu seinem oberen Ende und weiter im Abstand zur Anlenkung der Hauptsäule 3 um eine unter einem dritten Winkel zur Horizontalen im Raum liegende, einen dritten Gelenkpunkt eines sphärisches Getriebe bildende, Achse 16 am hinteren Dachteil 2 angelenkt. Unterendig ist der Hauptlenker 5 um eine unter einem vierten Winkel zur Horizontalen schräg im Raum liegende, einen vierten Gelenkpunkt eines sphärisches Getriebe bildende, Achse 17 an der karosseriefesten Konsole 15 angelenkt.
Wie insbesondere aus der Darstellung der Fig. 2 ersichtlich streben die gedachten Verlängerungen 13a, 14a und 16a, 17a der schräg im Raum liegend ausgerichteten Achsen 13, 14 und 16, 17 einem gemeinsamen Fluchtpunkt 20 zu. Der gemeinsame Fluchtpunkt 20 in dem sich die gedachten Verlängerungen 13a, 14a und 16a, 17a der Anlenkachsen 13, 14 der Hauptsäule 3 und der Anlenkachsen 16, 17 des Hauptlenkers 5 schneiden liegt in einem ein Mehrfaches, vorzugsweise wenigstens das Doppelte der Fahrzeugbreite betragenden Abstand jenseits der gegenüberliegenden Fahrzeugaußenseite.
Bei der gezeigten Ausführungsform eines Gestänges für ein Klappverdeck ist, wie gleichfalls deutlich in der Fig. 2 dargestellt, weiter vorgesehen, daß die Anlenkachsen 14 und 17 von Hauptsäule 3 und Hauptlenker 5 an der Fahrzeugkarosserie und die Anlenkachsen 13 und 16 von Hauptsäule 3 und Hauptlenker 5 am hinteren Dachrahmenteil 2 jeweils einen kleineren Fluchtwinkel zwischen sich einschließen als die beiden Anlenkachspaare 14, 17 und 13, 16 miteinander.

## Patentansprüche

1. Klappverdeck für Cabriofahrzeuge mit einem zum Öffnen des Verdeckes einklappbaren Verdeckgestänge, welches eine um eine erste Anlenkachse (14) schwenkbar an die Fahrzeugkarosserie angeschlossenen Hauptsäule (3), einen um eine zweite Achse (13) schwenkbar mit dieser verbundenen hinteren Dachrahmenteil (2) und einen mit letzterem gleichfalls mittels einer Anlenkachse (11) schwenkbar verbundenen vorderen Dachrahmenteil (1) sowie einen um zu den Anlenkachsen (13, 14) der Hauptsäule (3) und des hinteren Dachrahmenteiles (2) beabstandete Anlenkachsen (16, 17) schwenkbar einerseits an der Fahrzeugkarosserie (15) und andererseits am hinteren Dachrahmenteil (2) angelenkten Hauptlenker (5) sowie wenigstens einen weiteren Lenker, insbesondere eine einerseits am vorderen Dachrahmenteil (1) und andererseits am Stoffspannbügel (4) des Verdeckgestänges angreifende Lenkerkette, umfaßt,
**dadurch gekennzeichnet,**
**daß** die Anlenkachsen (13, 14) der Hauptsäule einerseits an der Fahrzeugkarosserie (15) und andererseits am hinteren Dachrahmenteil (2) und ferner die Anlenkachsen (16, 17) des Hauptlenkers (5) einerseits an der Fahrzeugkarosserie (15) und andererseits am hinteren Dachrahmenteil (2) unter unterschiedlichen Winkeln zur Horizontalen ausgerichtet sind.

2. Klappverdeck nach Anspruch 1, **dadurch gekennzeichnet, daß** die Anlenkachsen (13, 14, 16, 17) von Hauptsäule (3) und Hauptlenker (5) einerseits an der Fahrzeugkarosserie (15) und andererseits am hinteren Dachrahmenteil (2) in einer einem gemeinsamen Fluchtpunkt (20) zustrebenden Neigungslage gegenüber der Horizontalen ausgerichtet sind.

3. Klappverdeck nach Anspruch 2, **dadurch gekennzeichnet, daß** der gemeinsame Fluchtpunkt (20) für sämtliche Anlenkachsen (13, 14, 16, 17) der Hauptsäule (3) und des Hauptlenkers (5) jeweils mit einem Abstand zu dieser jenseits der gegenüberliegenden Fahrzeugaußenseite liegt.

4. Klappverdeck nach einem der Ansprüche 1 bis 3, **dadurch gekennzeichnet, daß** die Anlenkachsen (14, 17) von Hauptsäule (3) und Hauptlenker (5) an der Fahrzeugkarosserie (15) und die Anlenkachsen (13, 16) von Hauptsäule (3) und Hauptlenker (5) am hinteren Dachrahmenteil (2) jeweils einen kleineren Fluchtwinkel zwischen sich einschließen als die beiden Anlenkachspaare miteinander.

5. Klappverdeck nach einem der Ansprüche 1 bis 4, **dadurch gekennzeichnet, daß** sämtliche Anlenkachsen einerseits der Hauptsäule (3) und andererseits des Hauptlenkers (5) durch einfache Drehlager gebildet sind.

## Claims

1. Foldable top for convertible vehicles with a top linkage which folds in for opening the top and comprises a main column (3) connected to the vehicle body so as to be pivotable about a first axis of articulation (14), a rear roof frame part (2) connected to a second axis (13) so as to be pivotable thereabout and a front roof frame part (1) connected to the rear roof frame part (2) also so as to be pivotable by means of an axis of articulation (11) and a main connecting rod (5) pivotally articulated, on the one hand, to the vehicle body (15) and, on the other hand, to the rear roof frame part (2) about axes of articulation (16, 17) spaced from the axes of articulation (13, 14) of the main column (3) and the rear roof frame part (2), and at least one further connecting rod, in particular a guide rod chain acting, on the one hand, on the front roof frame part (1) and, on the other hand, on the fabric tightening clamp (4) of the top linkage, **characterised in that** the axes of articulation (13, 14) of the main column, on the one hand, on the vehicle body (15) and, on the other hand, on the rear roof frame part (2) and also the axes of articulation (16, 17) of the main connecting rod (5), on the one hand, on the vehicle body (15) and, on the other hand, on the rear roof frame part (2) are oriented at different angles to the horizontal.

2. Foldable top according to claim 1, **characterised in that** the axes of articulation (13, 14, 16, 17) of the main column (3) and main connecting rod (5), on the one hand, on the vehicle body (15) and, on the other hand, on the rear roof frame part (2) are aligned in an inclined position relative to the horizontal tending toward a common point of alignment.

3. Foldable top according to claim 2, **characterised in that** the common point of alignment (20) for all the axes of articulation (13, 14, 16, 17) of the main column (3) and the main connecting rod (5) is respectively located spaced from the main column (3) beyond the opposing outer side of the vehicle.

4. Foldable top according to any one of claims 1 to 3, **characterised in that** the axes of articulation (14, 17) of the main column (3) and main connecting rod (5) on the vehicle body (15) and the axes of articulation (13, 16) of the main column (3) and main connecting rod (5) on the rear roof frame part (2) each enclose a smaller angle of alignment between them than the two pairs of axes of articulation with respect to one another.

5. Foldable top according to any one of claims 1 to 4, **characterised in that** all the axes of articulation, on the one hand of the main column (3) and, on the other hand of the main connecting rod (5) are formed by simple pivot bearings.

## Revendications

1. Toit pliant pour véhicules convertibles, avec une tringlerie de capote, rétractable par rabattement pour effectuer l'ouverture de la capote, tringlerie comprenant une colonne principale (3) raccordée à la carrosserie de véhicule, de façon à pouvoir pivoter autour d'un premier axe d'articulation (14), une partie de cadre de toit (2) arrière, reliée à cette colonne principale, de façon à pouvoir pivoter autour d'un deuxième axe (13), et une partie de cadre de toit (1) avant, également reliée à pivotement à cette dernière partie de cadre de toit arrière, au moyen d'un axe d'articulation (11), ainsi qu'un bras articulé principal (5) articulé de façon à pouvoir pivoter, d'une part, sur la carrosserie de véhicule (15) et, d'autre part, sur la partie de cadre de toit (2) arrière, autour d'axes d'articulation (16, 17), espacés par rapport aux axes d'articulation (13, 14), de la colonne principale (3) et de la partie de cadre de toit (2) arrière, ainsi qu'au moins un autre bras articulé, en particulier une chaîne de bras articulés agissant, d'une part, sur la partie de cadre de toit (1) avant et, d'autre part, sur l'arceau tendeur de toile (4) de la tringlerie de capote,
**caractérisé en ce que**
les axes d'articulation (13, 14) de la colonne principale prévus, d'une part, sur la carrosserie de véhicule (15) et, d'autre part, sur la partie de cadre de toit (2) arrière et, en outre, les axes d'articulation (16, 17) du bras articulé principal (5) d'une part sur la carrosserie du véhicule (15) et, d'autre part, sur la partie de cadre de toit (2) arrière, sont orientés sous des angles différents par rapport à l'horizontale.

2. Toit pliant selon la revendication 1, **caractérisé en ce que** les axes d'articulation (13, 14, 16, 17) de la colonne principale (3) et du bras articulé principal (5), d'une part, sur la carrosserie de véhicule (15) et, d'autre part, sur la partie de cadre de toit (2) arrière, sont orientés selon une position d'inclinaison tendant vers un point de fuite (20) commun par rapport à l'horizontale.

3. Toit pliant selon la revendication 2, **caractérisé en ce que** le point de fuite (20) commun pour l'ensemble des axes d'articulation (13, 14, 16, 17) de la colonne principale (3) et du bras articulé principal (5) est chaque fois situé, à distance de cette colonne principale, au delà de la face extérieure opposée de la carrosserie.

4. Toit pliant selon l'une des revendications 1 à 3, **caractérisé en ce que** les axes d'articulation (14, 17) de la colonne principale (3) et du bras d'articulation principal (5), sur la carrosserie de véhicule (15), et les axes d'articulation (13, 16) de la colonne principale (3) et du bras articulé principal (5), sur la partie de cadre de toit (2) arrière, font entre eux chaque fois un angle de fuite inférieur à celui que font ensemble les deux paires d'axes d'articulation.

5. Toit pliant selon l'une des revendications 1 à 4, **caractérisé en ce que** l'ensemble des axes d'articulation, d'une part, de la colonne principale (3) et, d'autre part, du bras articulé principal (5) sont formés par des paliers de rotation simples.
